(19) Europäisches Patentamt
European Patent Office
Office européen des brevets

(11) **EP 4 134 952 A1**

(12) **EUROPEAN PATENT APPLICATION**

(43) Date of publication:
**15.02.2023 Bulletin 2023/07**

(21) Application number: **21191111.0**

(22) Date of filing: **12.08.2021**

(51) International Patent Classification (IPC):
*G10L 19/018* $^{(2013.01)}$    *H04N 21/233* $^{(2011.01)}$
*H04N 21/81* $^{(2011.01)}$     *H04N 21/8358* $^{(2011.01)}$
*H04N 21/254* $^{(2011.01)}$

(52) Cooperative Patent Classification (CPC):
**G10L 19/018; H04N 21/23109; H04N 21/23418;**
**H04N 21/234345; H04N 21/8113; H04N 21/8358;**
**H04N 21/8456**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Blindu, Vlad-Alexandru**
  **Bucharest (RO)**
• **Hermann, Edward**
  **Bucharest (RO)**

(72) Inventors:
• **Blindu, Vlad-Alexandru**
  **Bucharest (RO)**
• **Hermann, Edward**
  **Bucharest (RO)**

(74) Representative: **Vasilescu, Raluca**
**Cabinet M. Oproiu**
**Patent and Trademark Attorneys**
**42, Popa Savu Street**
**Sector 1, P.O. Box 2-229**
**011434 Bucharest (RO)**

(54) **COMPUTER-IMPLEMENTED METHOD AND SYSTEM OF WATERMARKING A MEDIA FILE INCLUDING AN AUDIO SIGNAL AND IDENTIFICATION OF THE WATERMARK IN A DIGITAL MEDIA STREAM**

(57)    This patent relates to a computer-implemented method of watermarking a media file including an audio signal and identification of the watermark in a digital media stream characterized in that the method comprises the steps of receiving an uncompressed media file from at least one end user, together with a request to create a watermark and to insert said watermark in the media file, generating the watermark, inserting of an anchor, and a watermark, sending the imprinted media file to the end user, and to a broadcasting entity, compressing the imprinted media file by the broadcasting entity and broadcasting the compressed imprinted media file to a digital media stream, and further comprises receiving the digital media stream that includes a compressed imprinted media file, together with a request to identify the watermark in the compressed imprinted media file and identifying the watermark as the resulting signal in at least one stream segment.

Fig.1

EP 4 134 952 A1

## Description

### Field of the invention

The invention is applicable to the digital broadcasting of media files, including but not limiting digital transmission technologies by internet, TV cable, terrestrial digital broadcasting. In particular the invention applies to a method and a system for automatic identification of a digital broadcasting of media files.

### Background of the invention

A media file is a file having audio-video content or only audio content.

In order to be broadcasted to the public, the audio-video content or only audio content is encrypted in a digital media file, hereafter for simplicity referred to as "media file", the encryption depending on the type of broadcasting, and then the public can hear and/or see the content of the media file using a receiving device that decrypts the respective media file. Sometimes the audio, or audio-video content refers to artistic creations according to the general definition of copyright laws. In the invention it is not important the kind of content of the media file.

In some situations, it is necessary to monitor the broadcasting of specific media files originating from specific end users, namely to identify for each specific media files which broadcasting entity has broadcasted it and when. The monitoring activity is carried out by some sort of authority that keeps the evidence of the broadcasting entities on one hand and the evidence of the specific end users on the other hand.

One classical example is when the audio, video or audio-video content is protected by copyright laws. The specific end user in this case is the author of the audio, video or audio-video content and/or the producer of the media file, either or both of them entitled to remuneration based on the number of broadcasting of the copyrighted audio, video or audio-video content by each broadcasting entity.

Other example is when the audio, video or audio-video content is the subject to a contract where the related payment due to the specific end user is based on the number of broadcasting of the copyrighted audio, or audio-video content by each broadcasting entity.

### Disadvantages of prior art

The current state of art does not disclose a fully automated process of watermarking and identification by means of the watermarks of the digital broadcasting of media files from the moment when the media files are released to the public by their respective end users in a media stream and throughout the time period when the media files are broadcasted by the respective broadcasting entities.

For example, in case of the audio, video or audio-video content is protected by copyright laws or by any contract providing remuneration based on the number of broadcasting of said content, the collection of the information related to the broadcasting of copyright-protected media files by the collective management bodies, is carried out on the basis of the reports made by the broadcasting entities to the collective management bodies. The disadvantages of this reporting procedure include: excessive rely on the goodwill of each broadcasting entity, multiplication of errors and inconsistencies because each broadcasting entity has its own reporting system, difficulties or impossibility for the management bodies to integrate various formats of reports of each broadcasting entity. The end result is that the collective management bodies are not capable of having correct information regarding when each copyright-protected media file has been broadcasted and by which broadcasting entity, which has direct consequences on the financial remuneration of the authors.

Current technical solutions watermarking and identification by means of the watermarks of the digital broadcasting of media files have some disadvantages:

When the watermarked media files are released into the media stream, in order to identify the watermarks, it is required to know the limits of the media file as they are usually inserted at the beginning of the media file. In order to detect the watermark, it is necessary to analyse bit by bit the entire media file, which needs allocation of a big percentages of resources. In case the watermarked media file is truncated by the broadcasting entity- as it happens frequently, most of the watermarks are lost or altered and they cannot be detected anymore.

Watermarks are usually inserted in the uncompressed files. Many watermarks are destroyed during the compression that is carried out before broadcasting of the media files.

### Problem solved by the invention

The problem to be solved by the invention is to fully automate the entire process of watermarking and identification of the watermarks and to provide robust watermarks less affected by file compression, the watermarks being easy to be identified independently of knowing or not the moment of broadcasting of the respective media files using a reduced amount of computing power.

## Summary of the invention

In order to solve the problem, the inventors conceived a computer-implemented method of **watermarking** a media file including an audio signal and **identification** of the watermark in a digital media stream, the method comprises the following steps

S1
**receiving** by a Media Watermark Inserting Module of a **Central Processing Unit** an uncompressed media file from at least one **end user,** corresponding watermark, said request comprising media file information and to insert said watermark in the media file
S2

**generating** the watermark by the Media Watermark Inserting Module and sending the generated watermark to a Central **database** together with the media file information,
**selecting** the audio signal and **dividing** it into segments of pre-determined length, and defining for each segment a segment header and a segment body,

S3
**inserting** at the beginning of each of the segment headers an anchor by the Media Watermark Inserting Module, as follows:

**dividing** the segment header in even and odd points,
**carrying out** an anchor spline interpolation on the odd points for the amplitude of the audio signal resulting interpolated header even points,
**calculating** for each even header point an anchor difference between the real value and the interpolated value of the amplitude,
**depending** on the binary value of the anchor to be inserted, replacing the real value of the even header points as follows:

either by the header even point value + the anchor difference for the value or
by the header even point value - the anchor difference for the value 0.

S4
**inserting** the **watermark** by the Media Watermark Inserting Module in each of the segment bodies as follows:

**dividing** the segment body in even and odd points,
**carrying** out a watermark algorithm on the odd points based on the interpolation of the Fourier transform for the frequency of the audio signal resulting interpolated body even points,
**calculating** for each even body point a watermark difference between the real value and the interpolated value of the frequency:

**depending** on the binary value of the watermark to be inserted, replacing the real value of the even header points as follows:

either by the even point value + the watermark difference for the value 1, or
by the even point value - the watermark difference for the value 0.

**applying** the Inverse Fourier transform to the resulting data comprising the imprinted watermark, having as result the segment body bearing the watermark,

S5

**re-uniting** the bodies of the segments bearing the watermarks with the headers of the respective segments,
**re-uniting** all the segments, resulting an imprinted media file created according to the request of the first step.
**recording** the imprinted media file in the Central database,

**sending** the imprinted media file to the end user,
**sending** the imprinted media file from the end user to a broadcasting entity, and
**compressing** the imprinted media file by the broadcasting entity and **broadcasting** the compressed imprinted media file to a digital media stream.

SECOND GROUP OF STEPS: IDENTIFICATION OF WATERMARK

S6
**receiving** by a Media Watermark **Detecting** Module of the digital media stream that includes the compressed imprinted media file, together with a request to identify the watermark in the compressed imprinted media file by the **Central Processing Unit,**
S7

> **recording** by the Media Watermark **Detecting** Module stream segments of a predefined stream segments length,
> **extracting** by the Media Watermark **Detecting** Module the audio signal from the stream segments,

S8
**analysing** by the Media Watermark **Detecting** Module bit-by-bit each stream segment in search for the anchors,
S9
if at least one anchor is detected, **identifying** by the Media Watermark **Detecting** Module the watermark by applying the watermark detection algorithm based on the interpolation of the Fourier transform for the frequency of the audio signal for each stream segment:

> **dividing** the Fourier transformed stream segment in even and odd points,
> **carrying** out interpolation on the odd points of the stream segments and
> **comparing,** bit by bit, the interpolated signal with the received signal of the digital media stream,
> **identifying** the watermark as the resulting signal in at least one stream segment as the sign of the difference between interpolated signal and received signal for odd points,

S10
**storing** by the Media Watermark **Detecting** Module the identified watermark and the time of broadcasting of the compressed imprinted media file in the Central **database.**

In another aspect of the invention, it is provided a system for **watermarking** a media file including an audio signal and **identification** of the watermark in a digital media stream, the system comprises the following:

- **A Central Processing Unit** comprising :

  - A Media Watermark Inserting Module,
  - A Media Watermark **Detecting** Module,
  - A Central **database,**

- At least one **broadcasting entity,**
- At least one end user,
- A first communication system between the Central Processing Unit and the at least one broadcasting entity,
- A second communication system between the Central Processing Unit and at least one end user allowing access of the Central Processing Unit to a digital media stream,

In another aspect of the invention, it is provided a first data processing hardware having at least one computer processing unit core and comprising at least one volatile memory and at least one non-volatile memory, characterized in that it is configured to carry out the steps of the method

In another aspect of the invention, it is provided a first computer program characterized in that it comprises instructions which, when the program is executed by the first data processing hardware of claim 5, causes the first data processing hardware to carry out the steps of the method.

**Advantages of the invention**

The main advantages of this invention are the following:

- High accuracy, robustness and reliability of the watermarking and of the identification of the watermarks due to the following:
- The watermarks created with the method of the invention are more robust to compression than the watermarks of the prior art,
- The redundancy of the watermarks in each media file makes the system of watermarking even more robust, as even if some watermarks may be lost due to compression or truncation, there are sufficient watermarks left to ensure identification,
- The alterations of the media file due to the watermarking are not detected by the human ear; thus, the quality of the audio signal is not impaired by the presence of the watermarks.
- Reduced time of identification of the watermark in the digital media stream because the method is fully automated since the creation of the watermark and until the watermark is identified and because the method makes the identification of the watermarks independent from knowing when the watermarked media files are broadcasted,
- Reduced processing power because the computations for identification the watermark start only when the first anchor is detected and not continuously during the streaming.

**Brief description of the drawings**

Fig.1 represents schematically the principles of the method and the components of the system
Fig 2 represents schematically the steps of the method

List of references in the drawings:

1 Central Processing Unit

    11 Media Watermark Inserting Module
    12 Media Watermark Detecting Module
    13 Central database

2 At least one broadcasting entity
3 At least one end user

**Detailed description**

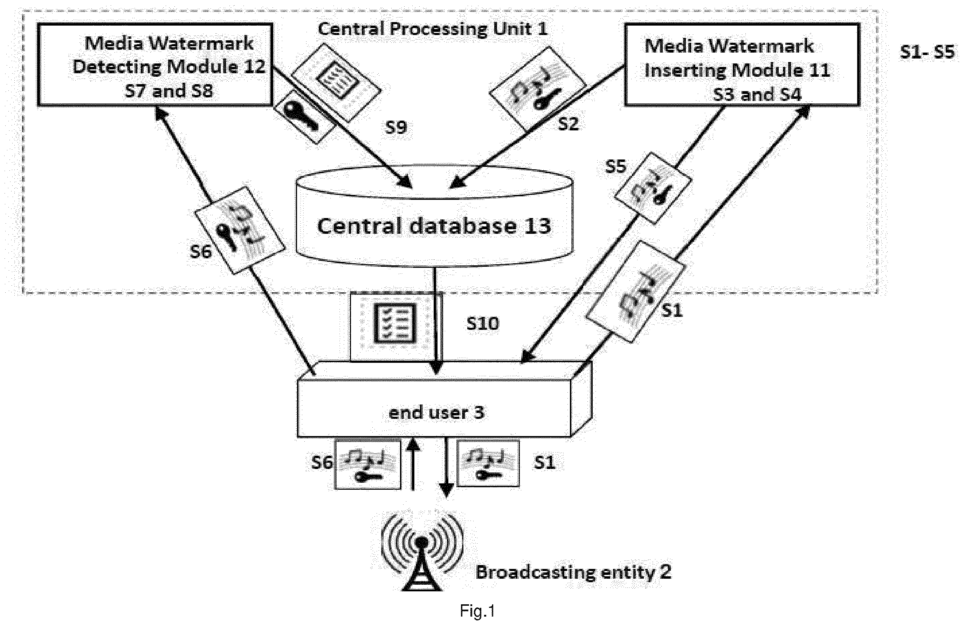

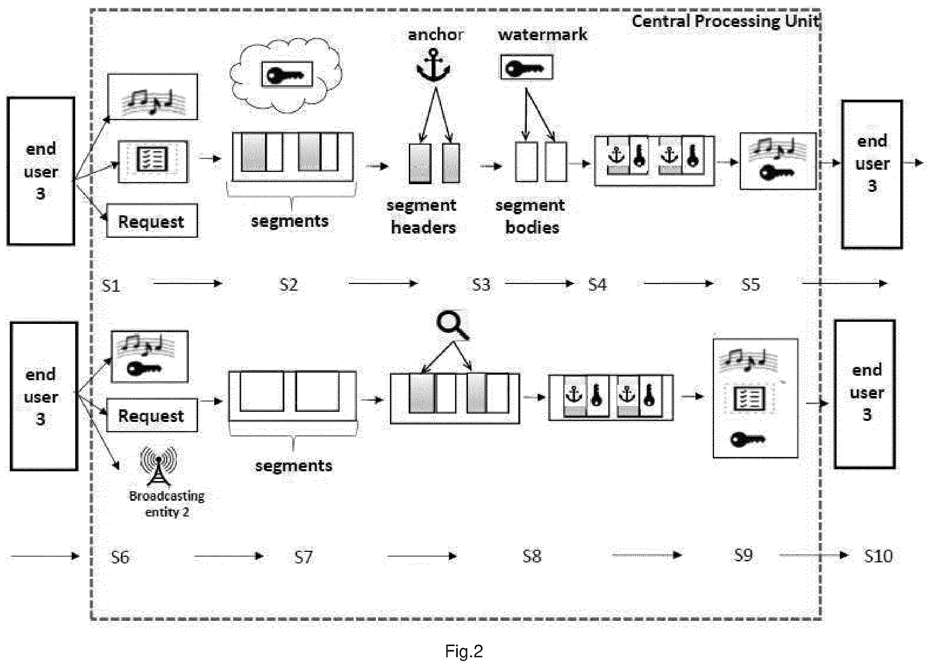

With reference to Fig.1 and Fig. 2, the computer-implemented method of **watermarking** a media file including an audio signal and **identification** of the watermark in a digital media stream according to the invention is used in a system for **watermarking** the media file including and **identification** of the watermark in the digital media stream.

For a better understanding of the method, the components of the system are described keeping the pace together with the disclosure of the method.

The components of the system are as follows with reference to Fig. 1:

- **A Central Processing Unit 1** comprising :

    - A Media Watermark Inserting Module 11,
    - A Media Watermark **Detecting** Module 12,
    - A Central **database** 13,

- At least one **broadcasting entity** 2,
- At least one **end user** 3.
- A first communication system between the Central Processing Unit 1 and the at least one broadcasting entity 2,
- A second communication system between the Central Processing Unit 1 and at least one end user 3 allowing access of the Central Processing Unit 1 to a digital media stream,

For simplicity, hereafter the term "broadcasting entity 2" shall refer to each of the at least one broadcasting entity 2, and the term "end user 3" shall refer to each of the at least one end user 3.

With reference to Fig.1 and Fig. 2, the method consists of sequences of 10 steps. The first five steps refer to the watermarking, whereas the last five steps refer to the identification of the watermarks.

In the first step of the method, the Media Watermark Inserting Module 11 receives from the end user 3 a media file in its original state, that is uncompressed, together with a request to create a watermark, and insert said watermark in the media file. The request is accompanied by details of identification of the media file such as: name of authors, date of creation, name of the file, etc. The media file- being either an audio file or an audio-video file, includes an audio signal.

An example of the records of the watermarks kept by the Central database 13 is as follows:

| Watermark | Register date | Owner | Media File name | Author 1 | Author 2 | Other details |
|-----------|---------------|-------|-----------------|----------|----------|---------------|

In the second step, the watermark is generated by the Media Watermark Inserting Module 11, in response to the request of step 1.

The watermark is a unique code for each media file, having a predefined number of characters.

The watermark is sent to the Central database 13 together with all its details of identification of the media file, said details being established by a keeper of the Central database 13.

Example of watermark:= "AX355MZR", having 8 characters.

The Media Watermark Inserting Module 11 **selects** the audio signal of the media file and **divides** it into segments of pre-determined length. For each segment it is defined a segment header and a segment body.

The pre-determined length of the segments is selected based on the following principles:

the minimum length must be defined such that to allow the insertion of the watermark in the media file without altering the quality of the sound,
the maximum length must be defined such that to enable the detection of the watermark in case the media file is broadcasted in a truncated form.

For example: a good quality audio clip has a sample rate of 44100 Hz which means that each second of the audio signal is represented as a series of 44100 samples.

In the same example, for the ease of understanding of the method, the segment has the pre-determined length of 1 second.

In the third step, the Media Watermark Inserting Module 11 inserts an **anchor** at the beginning of each of the segment headers.

The anchor is a binary code, generated as a constant by the Media Watermark Inserting Module 11 before the start of the method. Thus the anchor is the same for all media files for which the Media Watermark Inserting Module 11 creates watermarks.

Example of anchor represented as bits: Ach=0011001101010101.

The insertion of the anchor in the segment header is carried out by an anchor algorithm of spline interpolation in amplitude of the audio signal. The anchor is inserted in the segment header bit by bit using the anchor interpolation.

According to the anchor algorithm, the segment header is divided in even and odd points. Spline interpolation is carried out on the odd points for the amplitude of the audio signal resulting interpolated header even points. For each even header point it is calculated an anchor difference between the real value and interpolated value of the amplitude:

$$\Delta Header_n = \text{real value of the header even point} - \text{interpolated value of the header even point.}$$

Depending on the binary value of the anchor to be inserted, the real value of the even header points is replaced:

- either by the header even point value + $\Delta Header_n$ for writing the value 1, or
- by the header even point value - $\Delta Header_n$ for writing the value 0.

In the fourth step, the Media Watermark Inserting Module 11 **inserts** the watermark in the body of the segment.

The creation and insertion of the watermark triggers the modification of part of the samples. Taking the example of the segment of 1 second at a sample rate of 44100 Hz, this means that part of the 44100 samples of each second will be modified.

The challenge when inserting the watermark is double:

- On one hand the modification of the samples must not be detectable by human ear, and
- The watermark must withstand the operation of compression of the media file, in order words the compression must not destroy the watermark.

The insertion of the watermark is carried out using a watermark algorithm on the odd points of the body segments based on the interpolation of the Fourier transform FFT for the frequency of the audio signal.

The Fourier transform is applied to body of the segment.

According to the watermark algorithm, the segment body is divided in even and odd points.

Then the interpolation is carried out on the odd points for the Fourier transformed signal resulting interpolated even points of the body of the segment.

For each even point it is calculated a watermark difference between the real value and interpolated value of the frequency:

$$\Delta \text{Point}_n = \text{real value of the even point} - \text{interpolated value of the even point.}$$

The real value segment even points are replaced as follows depending on the binary value of the watermark to be inserted:

- either by the even point value + $\Delta\text{Point}_n$ for writing the value 1, or
- by the even point value - $\Delta\text{Point}_n$ for writing the value 0.

Then, the Inverse Fourier transform IFT is applied to the resulting data comprising the imprinted watermark, having as result the body of the segment bearing the watermark.

In the fifth step, the Media Watermark Inserting Module 11 re-unites the bodies of the segments bearing the watermarks with the headers of the respective segments, re-unites all the segments and an imprinted media file is created according to the request of the first step.

The imprinted media file is then recorded in the Central database 13 together with all its details of identification of the media file, as established by the keeper of the Central database 13.

The imprinted media file is then **sent** to the end user 3, who sends said imprinted media file to the broadcasting entity 2.

The broadcasting entity 2 by compresses the received imprinted media file according to prior art.

At the end of the fifth step, the broadcasting entity 2 broadcasts the compressed imprinted media file to a digital media stream.

In the sixth step, the Media Watermark **Detecting** Module 12 **receives** the digital media stream. In the digital media stream, some portions bear watermarks, other portions do not. For example, the transmission of a football match does not bear watermarks. The digital media stream includes the compressed imprinted media file, as created in steps 1 to 5 of the method together with a request to detect by the **Central Processing Unit 1** the watermark in the compressed imprinted media file.

Then, the Media Watermark **Detecting** Module 12 **defines** stream segments of a predefined stream segments length,

In the absence of the invention, it would not be possible to detect when the compressed imprinted media file bearing the watermark is broadcasted. Prior art detects only the watermarks for which it is known the time when the media file bearing said prior art watermark starts and ends.

In the seventh step, the Media Watermark **Detecting** Module 12 **records** stream segments of a predefined stream segments length and **extracts** the audio signal from the stream segments.

In the eighth step, the Media Watermark **Detecting** Module 12 analyses bit-by-bit the stream segments in search of the anchors.

For each bit a segment of header size is selected.

The detection of the anchor is made by using the anchor spline interpolation algorithm over the odd points is carried, resulting the interpolated value for even points.

For each even point difference between real value and interpolated value is calculated:

$$\Delta Point_n = real\ value\ of\ the\ even\ point - interpolated\ value\ of\ the\ even\ points$$

If $\Delta Point_n$ is positive then red bit is 1, otherwise the red bit is 0.

The binary red sequence is compared with the anchor code, if coincides then it is expected that the segment to bear a specific watermark.

Thus, in the ninth step, if at least one anchor is detected, the Media Watermark **Detecting Module** 12 identifies the watermark by applying the watermark detection algorithm based on the interpolation of the Fourier transform FFT for the frequency of the audio signal for the frequency of the audio signal

The Fourier transformed stream segment is divided in even and odd points. For the segment delimited by the detected anchor, the interpolation is carried out over the odd points over the transformed function, resulting the interpolated value for even points, and then it is compared, bit by bit, the interpolated signal with the received signal of the digital media stream.

For each even point, the watermark difference between real value and interpolated value is calculated:

$$\Delta Point_n = real\ value\ of\ the\ even\ point - interpolated\ value\ of\ the\ even\ point$$

If $\Delta Point_n$ is positive then bit 1 is red, otherwise bit 0 is red.

The watermark is **identified** as the resulting signal in at least one stream segment as the sign of the difference between interpolated signal and received signal for odd points.as identified by the Media Watermark **Detecting** Module 12.

The identification of the watermark includes an interrogation of the Central **database** 13 in order to retrieve the information from the watermark related to the details of identification of the media file, as saved in step 2 of the method.

At the end, in the tenth step, the watermark as identified is stored in the Central **database** 13 together with the time of identification and the details of the compressed imprinted media file and with the details of the media stream where the identification was carried out.

Use of the compressed imprinted media file of the method according to the invention has various advantages.

Firstly, the watermark is not altered by the compression of the imprinted media file, which enables the identification of the watermark by the Media Watermark **Detecting** Module 12 and secondly, the modifications of the imprinted media file based on the interpolation of the Fourier transform FFT for the frequency of the audio signal are not detected by the human ear; thus, the quality of the audio signal is not impaired by the presence of the watermark.

Both advantages above are due to the use in step 4 of the watermark algorithm based on the interpolation of the Fourier transform FFT for the frequency of the audio signal. The interpolation based the Fourier transform FFT produces small alterations to the audio signal that are not perceivable by the human ear.

Both advantages of the watermark as above lead to the advantage of the invention related to the robustness of the watermarking and of the identification of the watermarks.

Other advantages of the method according to the invention stem from the combined use of the anchor with the watermark.

- The structure of the watermark is more complex than the anchor that is the number of characters composing the watermark is larger than the number of characters composing the anchor.
- The watermark - as result of the watermark algorithm based on the interpolation of the Fourier transform FFT, is more stable than the anchor- as result of the anchor interpolation algorithm. On the other hand, the computations of the Fourier transform FFT require more processing power than the computations of the anchor interpolation algorithm.

Therefore, the use of the anchor combined with the use of the watermark combines the advantages of using the anchor, created with less processing power but less robust to compression with the advantages of a stable watermark, robust to compression and not impairing the quality of the audio signal, resulting the following advantages of the invention:

- The invention identifies accurately and with high degree of reliability when the compressed imprinted media file is broadcasted in any streaming transmission, irrespective of the duration of the transmission by streaming and including the situations when some compressed imprinted media files are broadcasted truncated, because the anchor and the watermark are placed redundantly in each segment. Also, by applying the invention it can be detected and identified the presence of any fraction that has the length of at least two segments - in the example less than 1 second. This is important when the media file is protected by some rights. So, if any fraction of the protected media file is incorporated into another media file, without having the right to do it, the detection of the protected media will trigger both an "unauthorized" and "unauthorized trimming" event. For example, in the advertising field, that generates a lot of small dimension media, but which carry a large number of usage rights/intellectual property information, many advertisements have 10 seconds. If the duration of a segment is of 1 second, the anchor and the watermark are placed 10 times during the advertisement. Even if the advertisement is broadcasted partially, there are sufficient segments left where the anchor and watermark are placed.

- Reduced time of identification of the watermark in the digital media stream because the method is fully automated since the creation of the watermark and until the watermark is identified and because time is saved by using the anchors to have hints when the watermarked media files are broadcasted.

- Saves computing power because the role of the anchor is to mark, like a bookmark, in the detection phase where the media file begins and thus where the watermark is expected to be identified. Consequently, the algorithm based on the interpolation of the Fourier transform FFT is applied only when the anchor is detected, thus for a limited period of time. The technical solution disclosed in the invention is both fast and requires a minimal amount of computing power, making it very economic to be implemented, the detection being almost real time for a standard mpeg stream. Applied to a large-scale detection system, the present solution will enable huge savings in terms of IT infrastructure costs.

The Central Processing Unit 1 is a first data processing hardware having at least one computer processing unit core and comprising at least one volatile memory RAM and at least one non-volatile memory ROM, configured to apply the steps of the method. The first data processing hardware configured as the Central Processing Unit 1 can be either a unique hardware unit or may comprise several separated hardware units communicating among them by machine code protocols or by communication protocols.

The invention further comprises a first computer program comprising instructions which, when the program is executed by the first data processing hardware, causes the first data processing hardware to carry out the steps of the method.

In a preferred embodiment, the Media Watermark Inserting Module 11, the Media Watermark Detecting Module 12, and Central database 13 form together a unique hardware unit, whereas in another preferred embodiment the Media Watermark Inserting Module 11, the Media Watermark Detecting Module 12, and Central database 13 are separated hardware units.

The end user 3 is a computing unit or a computer application belonging to or being in relationship with the author of the media file.

The broadcasting entity 2 is a computing unit or a computer application that broadcasts digital media streams, such as for example a television.

The first communication system between the Central Processing Unit 1 and the end user 3 is according to prior art, usually by telecommunications protocols. The Central Processing Unit 1 can communicate by various telecommunications protocols with various end users 3.

The second communication system between the Central Processing Unit 1 and the broadcasting entity 2 is the media stream itself.

Based on the high accuracy and reliability of the method and on the reduced time of identification of the watermark the end users can use the method of the invention for administration purposes, generally in relationship with the financial aspects of the broadcasting of the watermarked media files. One classical example is the use of the method of the invention to improve the collection of the end users' financial remunerations, when the media files are works protected by copyright.

In order to do so, it is required to count the occurrences of broadcasting of the compressed imprinted media files by each broadcasting entity 2. This is carried out by a further step of the method of the invention, as follows: S2-11

Each compressed imprinted media file is identified by the by the Media Watermark **Detecting Module** 12 as being broadcasted by each broadcasting entity 2 by using the method of invention. The result of the identification is sent to a Media Watermark Reporting Module 14.

Then, the Media Watermark Reporting Module 14 computes the occurrences of broadcasting each compressed imprinted media file broadcasted by each broadcasting entity 2.

At the end, the results of the computation are sent by the Media Watermark Reporting Module 14 to a decision maker. The way the decision maker takes decisions is outside the scope of this invention.

In case it is required to count the occurrences of broadcasting of the compressed imprinted media files by each broadcasting entity 2, the system further comprises the Media Watermark Reporting Module 14 configured to apply the step S2-11.

The Media Watermark Reporting Module 14 is a second data processing hardware having at least one computer processing unit core and comprising at least one volatile memory RAM and at least one non-volatile memory ROM, the second data processing hardware being configured to carry out the step 2-11.

The invention further comprises a second computer program characterized in that it comprises instructions which, when the program is executed by the second data processing hardware, causes the second data processing hardware to carry out the step 2-11.

In a preferred embodiment, the first data processing hardware and the second data processing hardware are arranged together a unique hardware unit, whereas in another preferred embodiment the first data processing hardware and the second data processing hardware are arranged in separated hardware units. This has the advantage of flexibility depending on the needs.

While the description of the method and the system was disclosed in detail in connection to preferred embodiments, those skilled in the art will appreciate that changes may be made to adapt a particular situation without departing from the essential scope to the teaching of the invention.

**Claims**

1. Computer-implemented method of **watermarking** a media file including an audio signal and **identification** of the watermark in a digital media stream, **characterized in that** the method comprises the following steps:

    FIRST GROUP OF STEPS: WATERMARKING

        S1
        **receiving** by a Media Watermark Inserting Module (11) of a **Central Processing Unit** (1) an uncompressed media file from at least one **end user** (3), together with a request to create a corresponding watermark, said request comprising media file information and to insert said watermark in the media file,
        S2

            **generating** the watermark by the Media Watermark Inserting Module (11) and sending the generated watermark to a **Central database** (13) together with the media file information,
            **selecting** the audio signal and **dividing** it into segments of pre-determined length, and defining for each segment a segment header and a segment body,

        S3
        **inserting** at the beginning of each of the segment headers an anchor by the Media Watermark Inserting Module (11), as follows:

            **dividing** the segment header in even and odd points,
            **carrying out** an anchor spline interpolation on the odd points for the amplitude of the audio signal resulting interpolated header even points,
            **calculating** for each even header point an anchor difference between the real value and the interpolated value of the amplitude:
            **depending** on the binary value of the anchor to be inserted, **replacing** the real value of the even header points as follows:

                either by the header even point value + the anchor difference for the value 1, or
                by the header even point value - the anchor difference for the value 0.

        S4
        **inserting** the **watermark** by the Media Watermark Inserting Module (11) in each of the segment bodies as follows:

            **dividing** the segment body in even and odd points,
            **carrying** out a watermark algorithm on the odd points based on the interpolation of the Fourier transform (FFT) for the frequency of the audio signal resulting interpolated body even points,
            **calculating** for each even body point a watermark difference between the real value and the interpolated value of the frequency,
            **depending** on the binary value of the watermark to be inserted, **replacing** the real value of the even header points as follows:

                either by the even point value + the watermark difference for the value 1, or
                by the even point value - the watermark difference for the value 0.

**applying** the Inverse Fourier transform (IFT) to the resulting data comprising the imprinted watermark, having as result the segment body bearing the watermark,

S5

**re-uniting** the bodies of the segments bearing the watermarks with the headers of the respective segments,
**re-uniting** all the segments, resulting an imprinted media file created according to the request of the first step.
**recording** the imprinted media file in the Central database (13),
**sending** the imprinted media file to the end user (3),
**sending** the imprinted media file from the end user (3) to a broadcasting entity (2), and
**compressing** the imprinted media file by the broadcasting entity (2) and **broadcasting** the compressed imprinted media file to a digital media stream
SECOND GROUP OF STEPS: IDENTIFICATION OF WATERMARK

S6
**receiving** by a Media Watermark **Detecting** Module (12) of the digital media stream that includes the compressed imprinted media file, together with a request to detect the watermark in the compressed imprinted media file by the **Central Processing Unit** (1),
S7

**recording** by the Media Watermark **Detecting** Module (12) stream segments of a predefined stream segments length,
**extracting** by the Media Watermark **Detecting** Module (12) the audio signal from the stream segments,

S8
**analysing** by the Media Watermark **Detecting** Module (12) bit-by-bit each stream segment in search for the anchors,
S9
if at least one anchor is detected, **identifying** by the Media Watermark **Detecting** Module (12) the watermark by applying the watermark detection algorithm based on the interpolation of the Fourier transform (FFT) for the frequency of the audio signal for each stream segment:

**dividing** the Fourier transformed stream segment in even and odd points,
**carrying** out interpolation on the odd points of the stream segments and
**comparing,** bit by bit, the interpolated signal with the received signal of the digital media stream,
**identifying** the watermark as the resulting signal in at least one stream segment as the sign of the difference between interpolated signal and received signal for odd points,

S10
**storing** by the Media Watermark **Detecting** Module (12) identified watermark and the time of broadcasting of the corresponding compressed imprinted media file stream in the Central **database** (13).

2. A method of computing the occurrences of broadcasting of a compressed imprinted media file by at least one **broadcasting entity** (2) **characterized in that** it comprises the following steps:
S2-11

**identifying** each compressed imprinted media file broadcasted by each of said at least one **broadcasting entity** (2) by using the method of claim 1, and sending the result of the identification to a Media Watermark **Reporting** Module (14),
**computing** by the Media Watermark **Reporting** Module (14) the occurrences of broadcasting each compressed imprinted media file broadcasted by each of said at least one **broadcasting entity** (2),
**sending** by the Media Watermark **Reporting** Module (14) the results of the computation to a decision maker.

3. A system of **watermarking** a media file including an audio signal and **identification** of the watermark in a digital media stream, **characterized in that** the system comprises the following:

- A **Central Processing Unit** (1) comprising :

- A Media Watermark Inserting Module (11),
- A Media Watermark **Detecting** Module (12),
- A Central **database** (13),

- At least one **broadcasting entity** (2),
- At least one end user (3),
- A first communication system between the Central Processing Unit (1) and the at least one broadcasting entity (2),
- A second communication system between the Central Processing Unit (1) and at least one end user (3) allowing access of the Central Processing Unit (1) to a digital media stream, **characterized in that** the system is configured to apply the method of claim 1.

4. The system of claim 3 wherein the system further comprises a Media Watermark **Reporting** Module (14), the system being configured to apply the method of claim 2.

5. A first data processing hardware having at least one computer processing unit core and comprising at least one volatile memory RAM and at least one non-volatile memory ROM, **characterized in that** it is configured to carry out the steps of the method of claim 1.

6. A second data processing hardware having at least one computer processing unit core and comprising at least one volatile memory RAM and at least one non-volatile memory ROM, **characterized in that** it is configured to carry out the step 2-11 of claim 2.

7. A first computer program **characterized in that** it comprises instructions which, when the program is executed by the first data processing hardware of claim 5, causes the first data processing hardware to carry out the steps of the method of claim 1

8. A second computer program **characterized in that** it comprises instructions which, when the program is executed by the second data processing hardware of claim 6, causes the second data processing hardware to carry out the step 2-11 of claim 2.

Fig.1

EP 4 134 952 A1

Central Processing Unit

end user 3

end user 3

end user 3

end user 3

anchor

watermark

segment headers

segment bodies

segments

segments

Request

Request

Broadcasting entity 2

S1  S2  S3  S4  S5

S6  S7  S8  S9  S10

Fig.2

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYUTA FUJIMOTO ET AL: "A Method of High Bit-Rate Data Hiding in Music Using Spline Interpolation", INTELLIGENT INFORMATION HIDING AND MULTIMEDIA SIGNAL PROCESSING, 2006. IIH-MSP '06. INTERNATIONAL CONFERENCE ON, IEEE, PI, 1 December 2006 (2006-12-01), pages 11-14, XP031033989, ISBN: 978-0-7695-2745-1 * paragraphs [0002], [0003]; figures 1-3 * | 1-8 | INV. G10L19/018 H04N21/233 H04N21/81 H04N21/8358 H04N21/254 |
| A | FALLAHPOUR MEHDI ET AL: "High capacity audio watermarking using FFT amplitude interpolation", IEICE ELECTRONICS EXPRESS IEICE ELECTRON. EXPRESS IEICE TRANS. INF. & SYST. LNCS IIH-MSP SIGNAL PROCESSING, [Online] vol. 634, no. 89, 25 July 2009 (2009-07-25), - 25 July 2009 (2009-07-25), pages 1057-1063, XP055881110, DOI: 10.1587/elex.6.1057 IEICE ELECTRONICS EXPRESS TRANS. INF. & SYST. LNCS IIH-MSP SIGNAL PROCESSING Retrieved from the Internet: URL:https://www.jstage.jst.go.jp/article/elex/6/14/6_14_1057/_pdf/-char/en> [retrieved on 2022-01-19] * paragraphs [02.1], [02.2] * | 1-8 | TECHNICAL FIELDS SEARCHED (IPC) G10L H04N |

-/--

The present search report has been drawn up for all claims

| Place of search | Date of completion of the search | Examiner |
|---|---|---|
| Munich | 19 January 2022 | Krembel, Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................................
& : member of the same patent family, corresponding document

EPO FORM 1503 03.82 (P04C01)

page 1 of 2

**EP 4 134 952 A1**

| | Europäisches Patentamt<br>European Patent Office<br>Office européen des brevets | **EUROPEAN SEARCH REPORT** | **Application Number**<br>**EP 21 19 1111** |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG X Y ET AL: "A blind robust digital watermarking using invariant exponent moments",<br>AEU – INTERNATIONAL JOURNAL OF ELECTRONICS AND COMMUNICATIONS, ELSEVIER, AMSTERDAM, NL,<br>vol. 70, no. 4,<br>20 January 2016 (2016-01-20), pages 416-426, XP029438219,<br>ISSN: 1434-8411, DOI: 10.1016/J.AEUE.2016.01.002<br>* paragraph [0002]; figure 1 *<br>* paragraphs [05.3], [05.4] *<br>----- | 1-8 | |
| A | US 2002/052885 A1 (LEVY KENNETH L [US])<br>2 May 2002 (2002-05-02)<br>* paragraphs [0030], [0063] – [0064]; figures 2,3,5,6 *<br>----- | 1-8 | |
| | | | **TECHNICAL FIELDS SEARCHED (IPC)** |

The present search report has been drawn up for all claims

| Place of search | Date of completion of the search | Examiner |
|---|---|---|
| Munich | 19 January 2022 | Krembel, Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 21 19 1111

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2022

| Patent document cited in search report | Publication date | Patent family member(s) | Publication date |
|---|---|---|---|
| US 2002052885 A1 | 02-05-2002 | US 2002052885 A1 | 02-05-2002 |
| | | US 2008052783 A1 | 28-02-2008 |
| | | US 2010281545 A1 | 04-11-2010 |

EPO FORM P0459

For more details about this annex : see Official Journal of the European Patent Office, No. 12/82